# EUROPEAN PATENT APPLICATION

(11) **EP 2 515 412 A1**
(43) Date of publication of application: **24.10.2012**
(21) Application number: 10837587.4
(22) Date of filing: 14.12.2010
(51) Int. Cl.: H02J 7/35, H01M 10/44, H01M 10/46, H02J 7/00

(54) **CHARGE/DISCHARGE SYSTEM**

(30) Priority: 14.12.2009 JP 2009282888
(71) Applicant: Sanyo Electric Co., Ltd., Osaka 570-8677 (JP)
(72) Inventor: YAMADA, Yohei, Moriguchi-shi Osaka 570-8677 (JP); NAKASHIMA, Takeshi, Moriguchi-shi Osaka 570-8677 (JP); SUGIGAKI, Chie, Moriguchi-shi Osaka 570-8677 (JP); HAGIHARA, Ryuzo, Moriguchi-shi Osaka 570-8677 (JP)
(74) Representative: Glawe, Delfs, Moll
(86) International application number: PCT/JP2010/072443
(87) International publication number: WO 2011/074561

(57) **Abstract**

This charge/discharge system includes a storage portion (71) storing power generated by a power generation module (21) coupled to a power grid (50) and discharging power to a load and a control portion (75) including a function of stopping discharge of the storage portion on the basis of a result of comparison between a first threshold set in response to the amount of power that can be generated by the power generation module and the amount of power consumption corresponding to power consumed by the load.

## Description

### Technical Field

The present invention relates to a charge/discharge system including a storage portion capable of storing power.

### Background Art

A power generation system including a storage cell capable of storing power is known in general. Generally in such a power generation system, a photovoltaic power generation module is interconnected to a power grid, and the power grid is connected with a load. Power generated by the photovoltaic power generation module is supplied to the load to be consumed. If the amount of power generation is larger than the amount of power consumption of the load, surplus power is made to reversely flow into the power grid. A storage portion is capable of storing power from the power grid and supplying the stored power to the load. If the amount of power consumption of the load is larger than the amount of power generation of the photovoltaic power generation module, power to cover the shortfall is purchased from the power grid, and if the amount of power consumption of the load is smaller than the amount of power generation of the photovoltaic power generation module, the surplus power is made to reversely flow into (sold to) the power grid.

In this power generation system, from the standpoint of the safety operation of the power grid or the like, an electric power company prohibits the power from the power grid stored in the storage portion from reversely flowing into (being sold to) the power grid. Furthermore, when the surplus power of the power generated by the photovoltaic power generation module reversely flows into the power grid, the electric power company does not desire increase in the amount of reverse power flow (increase in the amount of power selling) by the amount of power supply from the storage portion caused by discharging the storage portion to supply power to the load.

A power generation system in which power from a power grid stored in a storage portion does not reversely flow into the power grid or the storage portion is not discharged when surplus power of power generated by a photovoltaic power generation module reversely flows into the power grid is known.

In a power generation system described in Japanese Patent Laying-Open No. 2002-369406, a photovoltaic power generation module is interconnected to a power grid through a power conditioner. Furthermore, a storage cell is provided to be capable of storing power from the power grid. The power grid is connected with a load so that power is supplied from the power grid to the load, and power of the storage cell and the photovoltaic power generation module is also capable of being supplied to the load. In this power generation system, the amount of power purchase is monitored by a sensor, and when the amount of power purchase is larger than a prescribed threshold, only the power amount by which the amount of power purchase exceeds the threshold is discharged from the storage cell. Thus, all power discharged from the storage cell is consumed by the load, and hence power from the power grid stored in the storage portion does not reversely flow into the power grid. Furthermore, the storage cell is discharged only when power is purchased, and hence the storage portion is not discharged when surplus power of power generated by the photovoltaic power generation module reversely flows into (is sold to) the power grid.

### Prior Art

### Patent Document

Patent Document 1: Japanese Patent Laying-Open No. 2002-369406

### Summary of the Invention

### Problem to be Solved by the Invention

However, the amount of power consumption of the load and the amount of power generation of the photovoltaic power generation module may change rapidly, and hence a power purchase state may transition to a power selling state rapidly. For example, if the amount of power generation of the photovoltaic power generation module increases rapidly by change in weather, the power purchase state transitions to the power selling state rapidly. In the aforementioned power generation system, if the power purchase state transitions to the power selling state rapidly when the storage cell (storage portion) is discharged, there is such a problem that the power purchase state may transition to the power selling state while the discharge of the storage cell continues. Also, there is such a problem that the power of the storage cell (storage portion) reversely flows into (is sold to) the power grid at this time.

### Means for Solving the Problem

A charge/discharge system according to an aspect of the present invention includes a storage portion storing power generated by a power generation module coupled to a power grid and discharging power to a load and a control portion including a function of stopping discharge of the storage portion on the basis of a result of comparison between a first threshold set in response to the amount of power that can be generated by the power generation module and the amount of power consumption corresponding to power consumed by the load.

### Effects of the Invention

According to the present invention, even if the actual amount of power generation of the power generation module increases rapidly to transition from a power purchase state to a power selling state rapidly, the discharge of the storage portion can be suppressed.

### Brief Description of the Drawings

[Fig. 1] A block diagram showing the structure of a power generation system according to a first embodiment of the present invention.
[Fig. 2] A diagram for illustrating discharge control in summer of the power generation system according to the first embodiment of the present invention.
[Fig. 3] A diagram for illustrating discharge control in winter of the power generation system according to the first embodiment of the present invention.
[Fig. 4] A diagram for illustrating the rate of decrease in the amount of power purchase of the power generation system according to the first embodiment of the present invention.
[Fig. 5] A block diagram showing the structure of a power generation system according to a second embodiment of the present invention.
[Fig. 6] A diagram for illustrating discharge control of the power generation system according to the second embodiment of the present invention.
[Fig. 7] A block diagram showing the structure of a power generation system according to a third embodiment of the present invention.
[Fig. 8] A block diagram showing the structure of a power generation system according to a fourth embodiment of the present invention.

### Modes for Carrying Out the Invention

Embodiments of the present invention are now described with reference to the drawings.

### (First Embodiment)

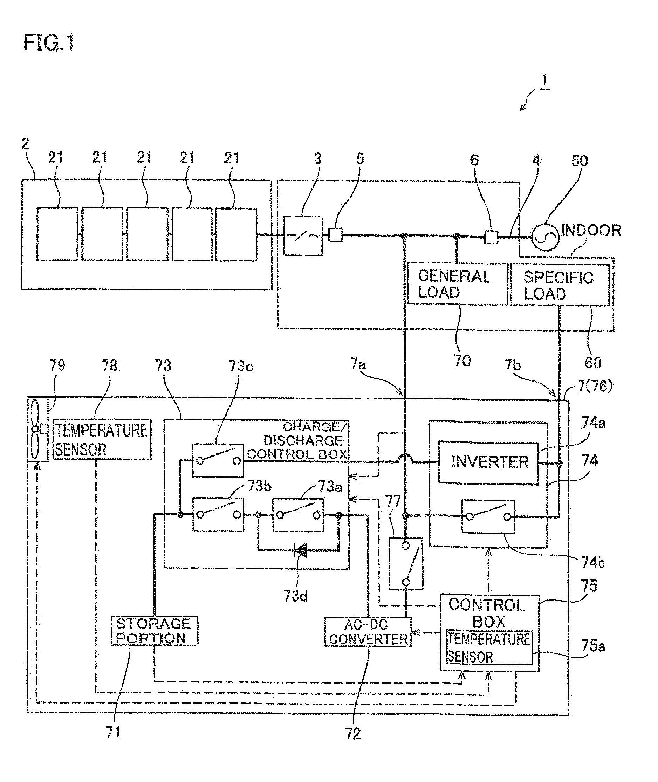

First, the structure of a photovoltaic power generation system 1 according to a first embodiment of the present invention is described with reference to Fig. 1.

The photovoltaic power generation system 1 includes a generated power output portion 2 outputting power generated with sunlight, an inverter 3 connected to a power grid 50 for outputting the power output from the generated power output portion 2 to the power grid 50 so that a reverse power flow is possible, a bus 4 connecting the inverter 3 and the power grid 50, a power detection portion 5 detecting the amount of power output from the generated power output portion 2, a power detection portion 6 detecting power (purchased power) supplied from the power grid 50 to the side of the photovoltaic power generation system 1, a storage unit 7 including a storage portion 71, a specific load 60 connected to the storage portion 71, and a general load 70 connected to the bus 4. The power detection portion 5 and the power detection portion 6 are examples of the "second power detection portion" and the "first power detection portion" in the present invention, respectively.

The inverter 3 converts direct-current power output from the generated power output portion 2 to alternating current. The generated power output portion 2 is interconnected to the power grid 50 through the inverter 3.

Each of the specific load 60 and the general load 70 is an apparatus driven by an alternating-current power source. The specific load 60 is regularly supplied with power by the storage portion 71 of the storage unit 7. When the storage portion 71 runs out of power, the specific load 60 is supplied with power from the side of the bus 4. The general load 70 is supplied with power from the generated power output portion 2, and also supplied with power from the power grid 50. The specific load 60 and the general load 70 are examples of the "load" in the present invention.

The generated power output portion 2 includes a plurality of photovoltaic power generation modules 21 connected in series to each other . The photovoltaic power generation modules 21 are examples of the "power generation module" in the present invention.

Next, the structure of the storage unit 7 is described.

The storage unit 7 mainly includes the storage portion 71 storing the power from the power grid 50, an AC-DC converter 72 converting power from alternating current to direct current, a charge/discharge control box 73 to control charge/discharge of the storage portion 71, an inverter unit 74 to supply power from the storage portion 71 to the side of the specific load 60, and a control box 75 controlling devices such as the storage portion 71, the AC-DC converter 72, and the charge/discharge control box 73. The control box 75 is an example of the "control portion" in the present invention.

The storage unit 7 is placed outdoors. The storage unit 7 has a wire 7a to receive power from the power grid 50 and a wire 7b to supply power to the specific load 60.

As the storage portion 71, a secondary cell (lithium ion storage cell, for example) exhibiting a small amount of natural discharge and having high charging/discharging efficiency is employed.

The charge/discharge control box 73 includes three switches 73a, 73b, and 73c capable of being switched on/off by the control box 75. The switches 73a and 73b are connected in series to each other in a charging path between the AC-DC converter 72 and the storage portion 71. A diode 73d is provided on a bypass path provided in parallel with the switch 73a. The diode 73d rectifies current in a direction from the AC-DC converter 72 toward the storage portion 71. The switch 73c is provided in a discharging path between the storage portion 71 and the inverter unit 74.

When the storage portion 71 is charged from the side of the bus 4, the switch 73b is first turned on, and then the switch 73a is turned on. Thus, the diode 73d can prevent a reverse flow from the storage portion 71 to the AC-DC converter 72. This reverse flow results from the low output voltage of the AC-DC converter 72 immediately after start of the AC-DC converter 72.

When power is discharged from the storage portion 71 to the specific load 60 through the inverter unit 74, the switch 73c is turned on. The switch 73a is turned off, and then the switch 73b is turned off. Similarly in this case, the diode 73d can prevent a reverse flow from the storage portion 71 to the AC-DC converter 72. When all the switches 73a, 73b, and 73c are turned on, both the charge and discharge of the storage portion 71 can be performed.

The inverter unit 74 includes an inverter 74a serving as a DC-AC converter to supply power of the storage portion 71 outputting direct-current power to the specific load 60 driven by the alternating-current power source and a switch 74b capable of being switched on/off. The switch 74b is provided between the wire 7a and the wire 7b. The switch 74b is usually turned on. The inverter unit 74 turns off the switch 74b when power of at least a prescribed voltage is supplied to the inverter 74a.

A switch 77 is provided in a portion of a current path between the wire 7a and the AC-DC converter 72 closer to the AC-DC converter 72 beyond a contact point with the switch 74b. The switch 77 is so configured as to be switched on/off in response to the temperature of a temperature sensor 75a provided in the control box 75. In other words, when the temperature of the temperature sensor 75a is not more than a prescribed temperature (about 70°C, for example), the switch 77 is turned on so that power from the side of the bus 4 is supplied to the AC-DC converter 72. When the temperature of the temperature sensor 75a is more than the prescribed temperature, the switch 77 is turned off so that electrical connection between the side of the bus 4 and the AC-DC converter 72 is cut off. The control box 75 controls ON/OFF of the switch 77.

The control box 75 is powered from a wire between the switch 77 and the AC-DC converter 72. Therefore, when the switch 77 is turned off, driving of the control box 75 automatically stops because of no power source. When the control box 75 stops, output from the AC-DC converter 72 is turned off (power supply to the AC-DC converter 72 is also disrupted), and the switches 73a and 73c are turned off. The switch 73c is turned off, whereby power supply to the inverter 74a is disrupted. The power supply to the inverter 74a is disrupted, whereby the switch 74b is turned on, as described above. The switch 74b is turned on, whereby the power from the side of the bus 4 can be supplied to the specific load 60 not through the storage portion 71 but through a current path passing through the wire 7a, the switch 74b, and the wire 7b.

Therefore, when the temperature in a housing 76 is low, the switch 74b and the switch 77 are turned off and on, respectively. When the inside of the housing 76 is in an abnormally heated state (the temperature in the control box 75 is at least about 70°C, for example), the switch 74b and the switch 77 are turned on and off, respectively. Thus, when the inside of the housing 76 is in the abnormally heated state, the AC-DC converter 72 that is a heat generating source, the storage portion 71, the inverter 74a, and the control box 75 can be stopped while the power supply from the side of the bus 4 to the specific load 60 is maintained. Consequently, when the inside of the housing 76 is in the abnormally heated state, further increase in the temperature can be suppressed so that thermal damage to each device in the housing 76 can be reduced.

In the housing 76, a temperature sensor 78 and an exhaust fan 79 are further provided. When the detection temperature of the temperature sensor 78 is at least a prescribed temperature (about 40°C), the exhaust fan 79 is driven so that heat can be exhausted out of the housing 76.

The temperature sensor 78 and the exhaust fan 79 are not connected to other devices (the storage portion 71, the control box 75, etc.) in the housing 76, but powered from the wire 7a to be driven. Consequently, the temperature sensor 78 and the exhaust fan 79 operate electrically independently from other devices (the storage portion 71, the control box 75, etc.) in the housing 76 even when the switch 77 is turned off.

The control box 75 has a function of controlling ON/OFF of the output of the AC-DC converter 72, the switches 73a to 73c of the charge/discharge control box 73, the switch 74b of the inverter unit 74, the switch 77, etc. on the basis of the charging amount of the storage portion 71, the detection result of the temperature sensor 75a, the current time (whether or not the current time is in the late night hours), etc. Specifically, if determining that the temperature in the housing 76 is at least the prescribed temperature (the temperature in the control box 75 is about 70°C, for example) on the basis of the detection result of the temperature sensor 75a, the control box 75 determines that the inside of the housing 76 is in the abnormally heated state, and turns off the switch 77. In a normal state (state that is not the abnormally heated state), the control box 75 controls ON/OFF of the charge/discharge control box 73, the AC-DC converter 72, and each switch such as the switch 74b of the inverter unit 74 on the basis of a prescribed program or the like.

The control box 75 controls each switch to charge the storage portion 71 from the power grid 50 in the middle of the night, for example, in normal operation and supply power from the storage portion 71 to the specific load 60 at any time of the day or night when power supply to the specific load 60 is required. A current path to charge the storage portion 71 by supplying power from the side of the bus 4 to the storage portion 71 is a path passing through the wire 7a, the switch 77, the AC-DC converter 72, the switch 73a, and the switch 73b. The current path passing through the wire 7a, the switch 77, the AC-DC converter 72, the switch 73a, and the switch 73b is an example of the "charging path" in the present invention. A current path to supply power to the specific load 60 by discharging the storage portion 71 is a path passing through the switch 73c, the inverter 74a, and the wire 7b. The power stored in the storage portion 71 is not supplied to the power grid 50. The current path passing through the switch 73c, the inverter 74a, and the wire 7b is an example of the "discharging path" in the present invention.

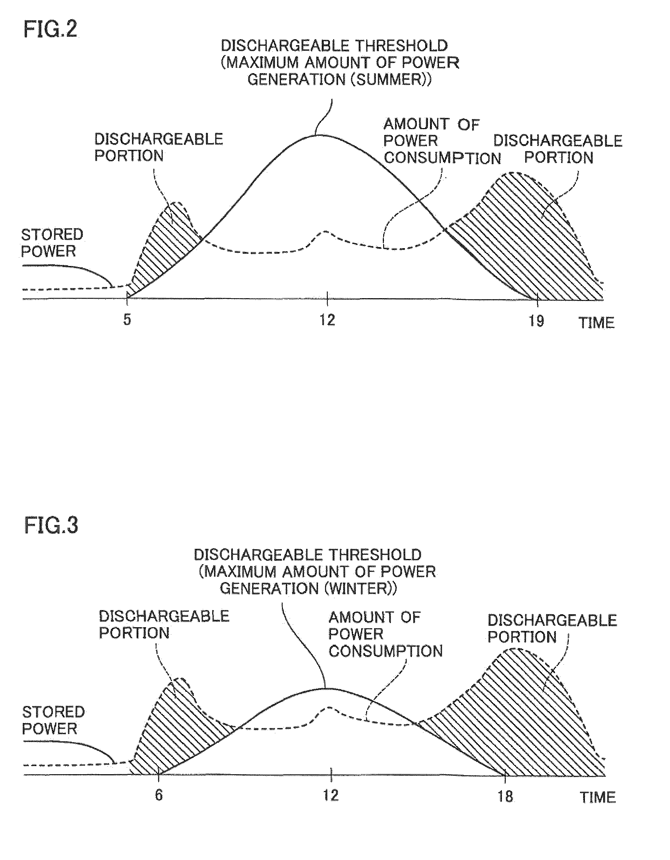

As shown in Figs. 2 and 3, the control box 75 has a function of stopping the discharge of the storage portion 71 on the basis of a result of comparison between a dischargeable threshold and the amount of power consumption of the load. The dischargeable threshold is an example of the "first threshold" in the present invention. The dischargeable threshold is preset in response to the amount of power that can be generated by the photovoltaic power generation modules 21. As an example, a value of the maximum amount of power generation itself is employed as the dischargeable threshold.

The maximum amount of power generation is a maximum value in a range of the amount of power that can be generated by the photovoltaic power generation modules 21 depending on conditions of using the photovoltaic power generation modules 21. The conditions of using the photovoltaic power generation modules 21 include the power generation capacity of the photovoltaic power generation modules 21, an area where the photovoltaic power generation system 1 is placed, a placement condition under which the photovoltaic power generation system 1 is placed, time, a season, etc. Therefore, the maximum amount of power generation (dischargeable threshold) is a value that changes depending on the power generation capacity of the photovoltaic power generation modules 21, an area where the photovoltaic power generation system 1 is placed, a placement condition under which the photovoltaic power generation system 1 is placed, time, a season, etc.

Changes in the maximum amount of power generation depending on time and a season are described. As shown in Fig. 2, power generation time is from 5:00 to 19:00 in summer, and the maximum amount of power generation shows a peak value at 12:00. As shown in Fig. 3, power generation time is from 6:00 to 18:00 in winter, and the peak value of the maximum amount of power generation at 12:00 is smaller than the peak value in summer. When comparing Fig. 2 and Fig. 3, equal amounts of power are consumed, but the dischargeable thresholds are different. Consequently, regions of dischargeable portions shown by hatching (hatched lines) are different. This means that dischargeable times and dischargeable amounts in summer and winter are different.

The control box 75 is so configured as to stop the discharge of the storage portion 71 to the specific load 60 when the amount of power consumption of the load is smaller than the aforementioned dischargeable threshold. Furthermore, the control box 75 is so configured as to be capable of discharging the storage portion 71 to supply power to the specific load 60 when the amount of power consumption of the load is larger than the dischargeable threshold. The control box 75 controls the storage portion 71 not to be discharged in a prescribed case even when the amount of power consumption of the load is larger than the dischargeable threshold of the photovoltaic power generation modules 21.

The amount of power consumption of the load is calculated from the sum of the actual amount of power output from the generated power output portion 2 detected by the power detection portion 5 and the amount of power purchase (= actual amount of power output from the generated power output portion 2 - amount of power consumption of the load) detected by the power detection portion 6. The amount of power consumption of the load denotes the amount of power consumption of the load receiving power supply from the power grid 50, and mainly denotes the amount of power consumption of the general load 70. If power is also supplied from the power grid 50 to the specific load 60, the amount of power consumption of the load denotes the sum of the amount of power consumption of the general load 70 and the amount of power consumption of the specific load 60.

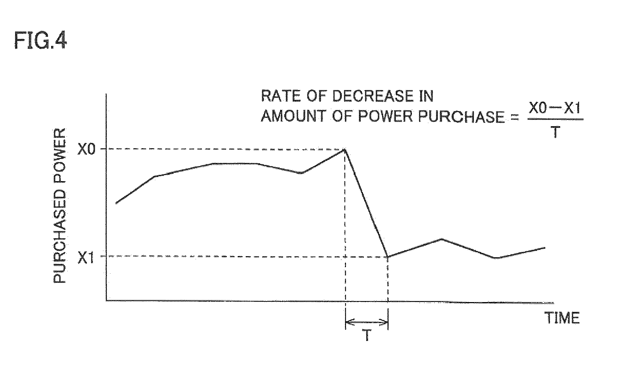

The control box 75 is so configured as to stop the discharge of the storage portion 71 when the degree of decrease (amount of decrease per unit time) in the amount of power purchase reaches at least a discharge stop threshold. Decrease in the amount of power purchase results from decrease in the amount of power consumption of the load or increase in the amount of power output from the generated power output portion 2. This decrease in the amount of power purchase is treated as decrease in the amount of power consumption of the load, whereby selling of the power of the storage portion 71 is more reliably suppressed. As shown in Fig. 4, when the amount of power purchase is detected every period T, the rate of decrease (amount of decrease per unit time) in the amount of power purchase is expressed by (X0 - X1)/T if the amount of power purchase decreases from X0 to X1 during the period T. The discharge stop threshold is an example of the "second threshold" in the present invention. The discharge stop threshold can be obtained by dividing a difference between the amount of power consumption of the load and the dischargeable threshold by a prescribed coefficient.

The control box 75 controls the discharge of the storage portion 71 so that the capacity of the storage portion 71 does not fall to a discharge prohibition threshold (50 % of a fully-charged state, for example) or less even when the storage portion 71 is discharged in the normal operation. The discharge prohibition threshold is an example of the "third threshold" in the present invention. The discharge prohibition threshold may be set properly in view of the amount of power consumption of the specific load 60. For example, the discharge prohibition threshold can be so set as to sufficiently cover the amount of power consumed by the specific load 60 in half a day or in a day.

If determining that the capacity of the storage portion 71 has fallen to the discharge prohibition threshold or less, the control box 75 stops power supply from the storage portion 71 to the specific load 60, and switches each switch to supply power directly from the bus 4 to the specific load 60. Specifically, the control box 75 turns off the switch 73c of the charge/discharge control box 73 and turns on the switch 74b of the inverter unit 74. At this time, the output of the AC-DC converter 72 is turned off, and no power charge is performed in the daytime hours. However, if the voltage of power reversely flowing from a consumer exceeds the allowable voltage of a distribution line, or the amount of power demand is expected to fall much below the amount of power generation, the control box 75 controls the AC-DC converter 72 and each switch to charge the storage portion 71.

In a time of emergency such as a power outage, power supply from the power grid 50 is stopped, so that the control box 75 is stopped. Furthermore, the switch 77 and the switches 73a and 73b are turned off. Thus, power is not supplied to the AC-DC converter 72, so that driving of the AC-DC converter 72 is also stopped. A voltage line signal of the wire 7a is input to the switch 73c, and detects that no voltage is applied to the wire 7a in the case of a power outage, whereby the switch 73c is turned on. The inverter 74a is so configured as to be activated by power supply from the storage portion 71.

The control box 75 controls the discharge of the storage portion 71 so that the residual capacity of the storage portion 71 does not fall to the discharge prohibition threshold (50 %, for example) or less in the normal operation. Consequently, a larger amount of power than the discharge prohibition threshold (50 % of the fully charged state) is certainly stored in the storage portion 71 when the discharge of the storage portion 71 to the specific load 60 starts in the time of emergency such as a power outage. In the case of a power outage, it is detected that no voltage is applied to the wire 7a, so that the switch 73c is turned on. Thus, the storage portion 71 is discharged even if the amount of power stored in the storage portion 71 falls to the discharge prohibition threshold (50 % of the fully-charged state) or less.

According to the first embodiment, as hereinabove described, the discharge of the storage portion 71 is stopped on the basis of the result of comparison between the dischargeable threshold and the amount of power consumption of the load. Thus, regardless of the actual amount of power generation, the discharge is stopped when power consumption of the load is smaller than the threshold (dischargeable threshold) based on the amount of power that can be generated, and hence even if the actual amount of power generation of the photovoltaic power generation modules 21 increases rapidly to transition from the power purchase state to the power selling state rapidly, the discharge of the storage portion 71 in the power selling state immediately after the transition can be suppressed. Consequently, selling of the power of the storage portion 71 resulting from rapid change in the amount of power generation of the photovoltaic power generation modules 21 can be suppressed.

According to the first embodiment, as hereinabove described, the power of the storage portion 71 is not made to reversely flow into the power grid 50 but is supplied to the specific load 60, whereby selling of the power of the storage portion 71 can be reliably prevented.

According to the first embodiment, as hereinabove described, the power of the storage portion 71 is not made to reversely flow into the power grid 50 but is supplied to the specific load 60, whereby no inverter interconnected to the power grid 50 except the inverter 3 may be provided.

According to the first embodiment, as hereinabove described, the dischargeable threshold is determined on the basis of a season, an area where the photovoltaic power generation system 1 is placed, a placement condition under which the photovoltaic power generation system 1 is placed, time, etc., whereby a value appropriate for the situation of the individual photovoltaic power generation system 1 can be set as the dischargeable threshold. Thus, excessive increase or excessive decrease in the discharging time and discharging power amount of the storage portion 71 can be suppressed, and hence in the individual photovoltaic power generation system 1, the discharge of the storage portion 71 in the power selling state can be effectively suppressed while selling of the power of the storage portion 71 can be effectively suppressed.

According to the first embodiment, as hereinabove described, in the normal operation, the control box 75 controls the charge and discharge of the storage portion 71 not to discharge the storage portion 71 when the amount of power stored in the storage portion 71 falls to the discharge prohibition threshold or less. Thus, in the normal operation, at least a certain amount of power stored in the storage portion 71 can be ensured constantly, whereby it is possible to sufficiently supply power from the storage portion 71 to the specific load 60 even in the time of emergency. In the normal operation, the storage portion 71 is charged/discharged when at least a certain amount of power is stored in the storage portion 71, and hence the depth of discharge of the storage portion 71 in the normal operation can be reduced. Thus, a burden on the storage portion 71 can be reduced, and hence the lifetime of the storage portion 71 can be increased.

Next, a specific example of the aforementioned photovoltaic power generation system 1 according to the first embodiment is described.

In this example, the capacity of the storage portion 71 is set at 7.85 kWh while the output power of the AC-DC converter 72 is set at 1.5 kW, and the photovoltaic power generation system 1 is so designed as to spend at least a half of midnight power hours (8 hours from 23:00 to 7:00, for example) charging the storage portion 71 from a zero state to the fully-charged state. In this case, a simple calculation shows that charging time is at least 5 hours. In a lithium ion storage cell, the charging rate must be slowed as full charge approaches, and hence actual charging time is further increased.

If the power consumption of the specific load 60 is set at about 600 Wh, an amount of power of about 3 kWh is required to drive the specific load 60 for 5 hours. If power is supplied from the storage portion 71 to the specific load 60 in the case of a five-hour power outage, the storage portion 71 must have a capacity of at least about 3 kWh. In the first embodiment, the discharge of the storage portion 71 is controlled to stop when the residual capacity of the storage portion 71 falls to 50 % of the capacity of the storage portion 71, so that a capacity of at least about 6 kWh is required to continuously drive the specific load 60 with a capacity of 50 % of the fully-charged state in the case of a five-hour power outage. To be safe, a value of 7.85 kWh larger than 6 kWh is determined.

Furthermore, in the example, the photovoltaic power generation system 1 is designed on the assumption that the power stored in the storage portion 71 is not fully discharged in a short time but output over a long time. Fully discharging the stored power in a short time in the daytime hours is unlikely to lead to reduction in the daytime power generation capacity of an electric power company. Preferably, the amount of power used by the specific load 60 per day is smaller than the storage capacity, and is so set that the specific load 60 can be driven for at least five hours, for example, with the power stored in the storage portion 71. If the specific load 60 is not employed, it is difficult to set the amount of load, and it is also difficult to properly set the capacity of the storage portion 71. In this example, the power rating of the inverter 74a is set at 1 kW, and the power consumption of the specific load 60 is set at about 1 kW at a maximum.

### (Second Embodiment)

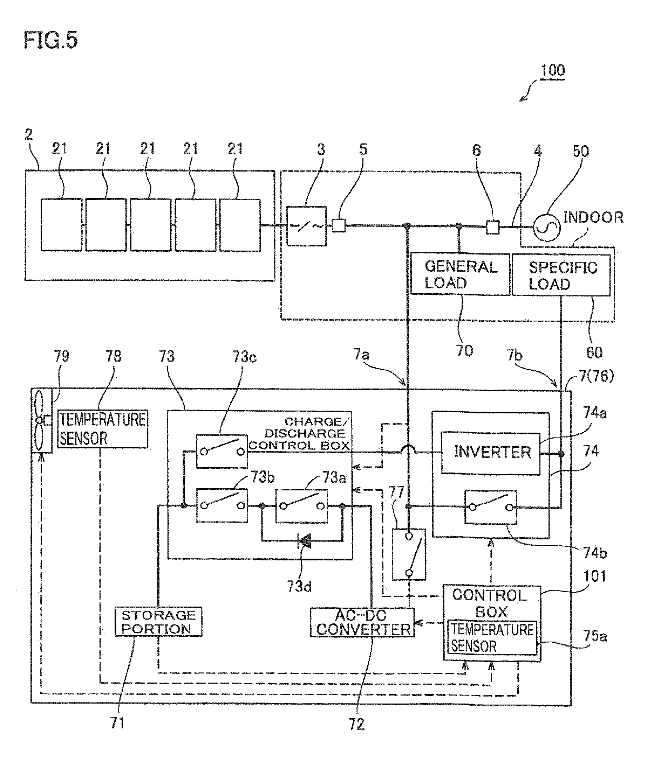

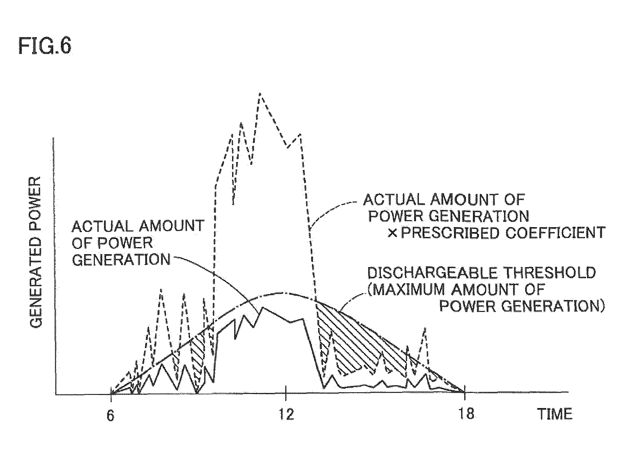

Next, a photovoltaic power generation system 100 according to a second embodiment of the present invention is described with reference to Figs. 5 and 6. In this second embodiment, an example of controlling discharge of a storage portion 71 on the basis of not only a dischargeable threshold (maximum amount of power generation) but also the actual amount of power generation is described, dissimilarly to the aforementioned first embodiment. As shown in Fig. 5, the structure of the photovoltaic power generation system 100 other than control of a control box 101 is similar to that of the photovoltaic power generation system 1 according to the aforementioned first embodiment. The control box 101 is an example of the "control portion" in the present invention.

The control box 101 of the photovoltaic power generation system 100 is so configured as to be capable of discharging the storage portion 71 to supply power to a specific load 60 when the amount of power consumption of the load is larger than a smaller amount of the dischargeable threshold or a maximum value of a predictive power generation amount range predicted from the actual amount of power generation of photovoltaic power generation modules 21. The maximum value of the predictive power generation amount range is an example of the "prediction threshold" in the present invention.

Here, the predictive power generation amount range is described. The amount of power generation of the photovoltaic power generation modules 21 may change rapidly by change in weather or the like. In this regard, the inventors have found on the basis of previous data of the amount of power generation that at least the amount of increase in the amount of power generation falls within a certain range. In other words, the inventors have found that it is possible to predict the upper limit of a power generation amount range representing what the amount of power generation immediately after a certain point can be from the actual amount of power generation at the certain point. Therefore, the maximum value of the predictive power generation amount range is employed as a threshold of discharge control (discharge of the storage portion 71 is allowed when the amount of power consumption is larger than the maximum value of the predictive power generation amount range), whereby rapid transition from a power purchase state to a power selling state is suppressed even if the amount of power generation increases rapidly when the storage portion is discharged, similarly to a case where the discharge control is performed employing the dischargeable threshold as the threshold.

As shown in Fig. 6, the dischargeable threshold and the maximum value of the predictive power generation amount range are not the same, and the magnitude relationship therebetween may change by time etc. Therefore, a smaller value of the dischargeable threshold or the maximum value of the predictive power generation amount range is employed as the threshold of discharge control, whereby a smaller value can be employed as the threshold. The maximum value of the predictive power generation amount range itself and the dischargeable threshold may not be compared with each other, but a smaller value of a value larger than the maximum value of the predictive power generation amount range or the dischargeable threshold may be employed as the threshold of discharge control.

In the second embodiment, the maximum value of the predictive power generation amount range is obtained by multiplying the actual amount of power generation by a prescribed coefficient. In Fig. 6, values obtained by multiplying the actual amounts of power generation by "3" (three times the actual amounts of power generation) as the coefficient are shown by a dotted line. In time ranges of hatched portions shown in Fig. 6, the maximum value of the predictive power generation amount is smaller than the dischargeable threshold, and hence the maximum value of the predictive power generation amount is employed as the threshold of discharge control. In the second embodiment, as shown in Fig. 6, the dischargeable time and dischargeable amount increase by the hatched portions as compared with a case where the dischargeable threshold is uniformly employed as the threshold of discharge control.

According to the second embodiment, as hereinabove described, power is discharged from the storage portion 71 when the amount of power consumption of the load is larger than the smaller amount of the dischargeable threshold or the maximum amount of the predictive power generation amount range predicted from the actual amount of power generation of the photovoltaic power generation modules 21 detected by a power detection portion 5. Not only in a case of discharging the storage portion 71 when the amount of power consumption of the load is larger than the dischargeable threshold but also in a case of discharging the storage portion 71 when the amount of power consumption of the load is larger than the maximum amount of the predictive power generation amount range predicted from the actual amount of power generation of the photovoltaic power generation modules 21, the amount of power generation in a case where the actual amount of power generation increases rapidly during discharge can be suppressed from exceeding the amount of power consumption of the load (transiting from the power purchase state to the power selling state during discharge), and hence the discharge of the storage portion 71 in the power selling state can be suppressed. Therefore, the smaller value of this dischargeable threshold or the maximum amount of the predictive power generation amount range predicted from the actual amount of power generation of the photovoltaic power generation modules 21 is employed as the threshold of discharge control, whereby the dischargeable time and dischargeable power amount of the storage portion 71 can be further increased while the discharge of the storage portion 71 in the power selling state is suppressed. Consequently, power of the storage portion 71 can be effectively utilized.

According to the second embodiment, as hereinabove described, the value obtained by multiplying the actual amount of power generation of the photovoltaic power generation modules 21 by the prescribed coefficient is employed as the maximum amount of the predictive power generation amount range predicted from the amount of power generation of the photovoltaic power generation modules 21, whereby the maximum amount of the predictive power generation amount range can be easily calculated on the basis of the actual amount of power generation of the photovoltaic power generation modules 21. This value may be obtained in view of sampling intervals of the amounts of power generation, the following capability of MPPT control of a power conditioner, regional characteristics, etc.

The remaining effects of the second embodiment are similar to those of the aforementioned first embodiment.

### (Third Embodiment)

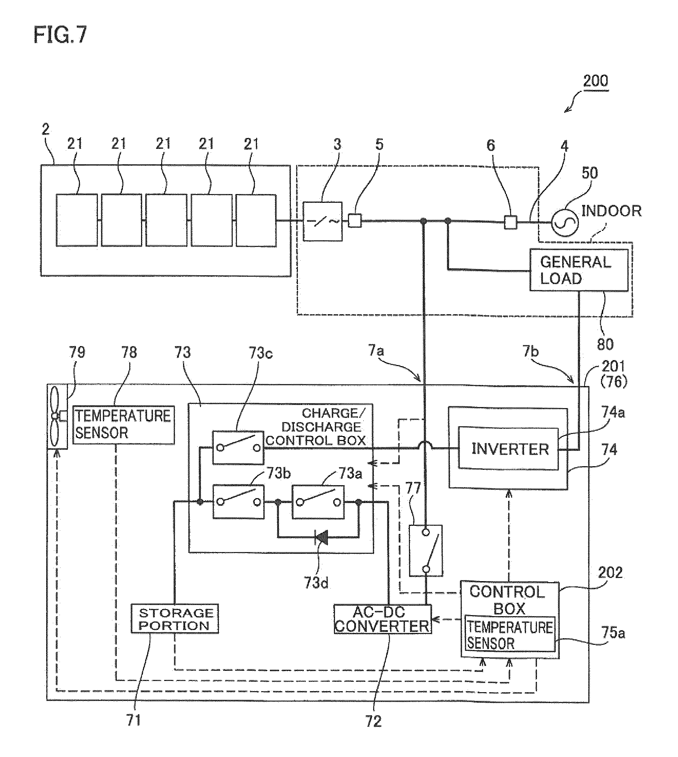

Next, a photovoltaic power generation system 200 according to a third embodiment of the present invention is described with reference to Fig. 7. In this third embodiment, an example of supplying power from a storage portion 71 to a general load 80 is described, dissimilarly to the aforementioned first embodiment in which power is supplied from the storage portion 71 to the specific load 60.

As shown in Fig. 7, in the photovoltaic power generation system 200 according to the third embodiment of the present invention, a bus 4 is connected with a storage unit 201 including the storage portion 71, and the storage portion 71 is connected with the general load 80. The general load 80 is also connected to the bus 4.

The general load 80 is an apparatus driven by an alternating-current power source. The general load 80 can be supplied with power from the bus 4 (from a generated power output portion 2 and a power grid 50), and also supplied with power from the storage portion 71 of the storage unit 201. The general load 80 is an example of the "load" in the present invention.

A control box 202 of the storage unit 201 is so configured as to be capable of discharging the storage portion 71 to supply power to the general load 80 when the amount of power consumption of the general load 80 is larger than a dischargeable threshold. The control box 202 is an example of the "control portion" in the present invention.

The control box 202 so controls the upper limit of the discharging amount as to discharge power not exceeding power obtained by subtracting the amount of power generation of photovoltaic power generation modules 21 from the amount of power consumption of the general load 80 when discharging the storage portion 71.

The structure of the photovoltaic power generation system 200 according to the third embodiment other than the aforementioned structure is similar to that of the photovoltaic power generation system 1 according to the aforementioned first embodiment.

According to the third embodiment, as hereinabove described, the upper limit of the discharging amount of the storage portion 71 is controlled, whereby reverse power flow from the storage portion 71 to the power grid 50 can be suppressed even when power is supplied from the storage portion 71 to the general load 80.

The remaining effects of the third embodiment are similar to those of the aforementioned first embodiment.

### (Fourth Embodiment)

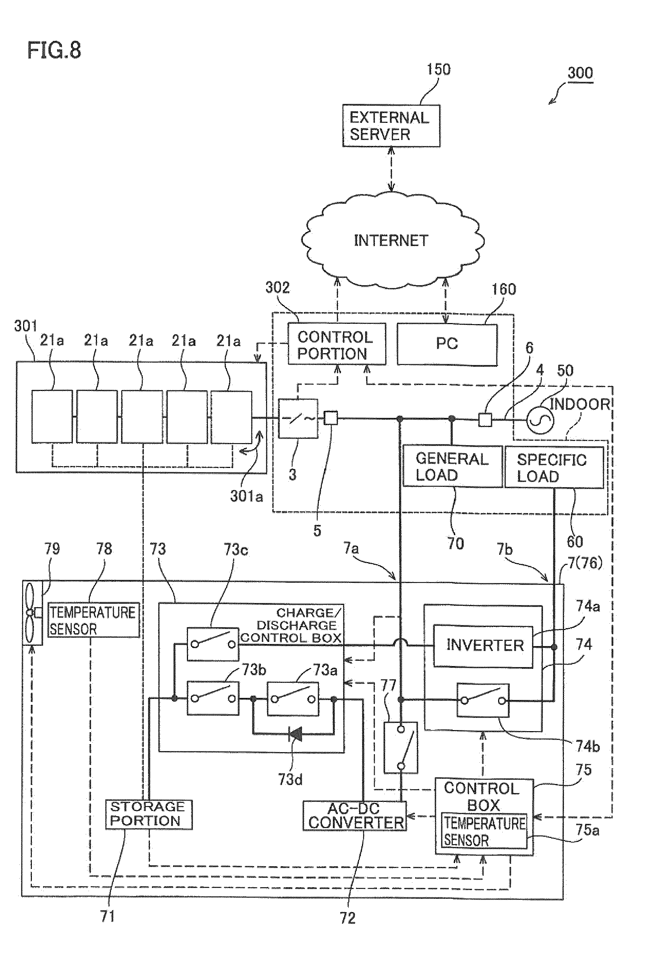

Next, a photovoltaic power generation system 300 according to a fourth embodiment of the present invention is described with reference to Fig. 8. In this fourth embodiment, an example of configuring the photovoltaic power generation system 300 so that power generated by a plurality of photovoltaic power generation modules 21a can be stored in a storage portion 71 is described, dissimilarly to the aforementioned first embodiment.

A generated power output portion 301 includes the plurality of photovoltaic power generation modules 21a connected to each other and a switching circuit portion 301a selectively (alternatively) switchably connecting the power generated by the photovoltaic power generation modules 21a to the side of an inverter 3 or to the side of the storage portion 71 of a storage unit 7. As the photovoltaic power generation modules 21a, solar cells having a small temperature coefficient (exhibiting small change of characteristics caused by temperature change) and exhibiting small seasonal fluctuation of maximum output operating voltage are desirably employed. As solar cells having a small temperature coefficient, solar cells (thin-film a-Si, hybrid solar cells of crystalline silicon and amorphous silicon thin film, or the like) employing a-Si or compound-based solar cells such as GaAs-based ones can be listed, for example.

The switching circuit portion 301a is so configured as to electrically cut off connection between the generated power output portion 301 and the storage portion 71 in a case of connecting the generated power output portion 301 to the side of the inverter 3, and as to electrically cut off connection between the generated power output portion 301 and the inverter 3 in a case of connecting the generated power output portion 301 to the side of the storage portion 71. Furthermore, the switching circuit portion 301a is capable of switching a connection state between the five photovoltaic power generation modules 21a to a series connection state where the five photovoltaic power generation modules 21a are connected in series to each other in the case of connecting the generated power output portion 301 to the side of the inverter 3. In addition, the switching circuit portion 301a is capable of switching the connection state between the five photovoltaic power generation modules 21a to a parallel connection state where the five photovoltaic power generation modules 21a are connected in parallel to each other in the case of connecting the generated power output portion 301 to the side of the storage portion 71.

A control portion 302 capable of communicating with a control box 75 of the storage unit 7 is provided. The control portion 302 has a function of transmitting a control command to the control box 75 of the storage unit 7 and receiving information related to the storage unit 7 such as the amount of power stored in the storage portion 71 from the control box 75 on the basis of the amount of power generation of the generated power output portion 301, the charging amount of the storage portion 71, the operating situation of the inverter 3, preset set information, etc. The control portion 302 also has a function of controlling the switching circuit portion 301a of the generated power output portion 301 etc. on the basis of the amount of power generation of the generated power output portion 301, the charging amount of the storage portion 71, the operating situation of the inverter 3, the preset set information, etc. More specifically, the control portion 302 determines whether the system is in normal operation or in an emergency state on the basis of the charging amount of the storage portion 71, the operating situation of the inverter 3, the preset set information, etc. The control portion 302 is an example of the "control portion" in the present invention.

If determining that the system is in the normal operation, the control portion 302 controls the switching circuit portion 301a to bring the photovoltaic power generation modules 21a into the series connection state and switch the connection target of the generated power output portion 301 to the side of the inverter 3. In the normal operation, power output from the generated power output portion 301 is consumed in a general load 70 or the like, and surplus power is made to reversely flow into a power grid 50.

If determining that the system is in the emergency state, the control portion 302 controls the switching circuit portion 301a to bring the photovoltaic power generation modules 21a into the parallel connection state and switch the connection target of the generated power output portion 301 to the side of the storage portion 71. In the emergency state, the power output from the generated power output portion 301 is supplied to the storage portion 71, and a specific load 60 is driven by the charging power of the storage portion 71 and the power output from the generated power output portion 301.

The control portion 302 can detect the amount of power generation of the photovoltaic power generation modules 21a, the amount of power purchase, the amount of power consumption in the loads (the specific load 60 and the general load 70), etc. on the basis of the detection results of a power detection portion 5 and a power detection portion 6. Furthermore, the control portion 302 is so configured as to transmit the amount of power generation of the photovoltaic power generation modules 21a, the amount of power purchase, the amount of power consumption in the loads, the state (the charging amount, the temperature state, etc.) of the storage portion 71, and another kind of information related to the photovoltaic power generation system 300 to an external server 150 through the Internet. This external server 150 is a server of a maintenance company of the photovoltaic power generation system 300, for example. Thus, the maintenance company can grasp the state of the photovoltaic power generation system 300 any time. This external server 150 can be accessed from a PC (personal computer) 160 or the like of a user through the Internet, and the user can confirm the state of his/her own photovoltaic power generation system 300 with the PC 160.

In the fourth embodiment, the photovoltaic power generation system 300 is so configured that various types of data such as a dischargeable threshold and a discharge stop threshold employed in charge/discharge control can be updated. The updated data such as a dischargeable threshold and a discharge stop threshold can be received from the external server 150, and the charge/discharge control of the storage portion 71 can be performed on the basis of the updated data. The external server 150 is an example of the "server" in the present invention.

The structure of the photovoltaic power generation system 300 according to the fourth embodiment other than the aforementioned structure is similar to that of the photovoltaic power generation system 1 according to the aforementioned first embodiment.

According to the fourth embodiment, in a time of emergency, the power generated by the photovoltaic power generation modules 21a can be stored in the storage portion 71, and hence the specific load 60 can be driven for a longer time.

The remaining effects of the fourth embodiment are similar to those of the aforementioned first embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are included.

For example, while the example of generating power with the photovoltaic power generation modules 21 has been described in each of the aforementioned first to fourth embodiments, the present invention is not restricted to this, but power generation modules such as other direct current generators or wind turbine generators generating power with another natural energy may be employed as power generation modules.

While the example of employing the lithium ion storage cell 711 as the storage portion 71 has been shown in each of the aforementioned first to fourth embodiments, the present invention is not restricted to this, but another secondary cell may be employed. For example, a storage cell such as a nickel-hydrogen storage cell or a lead storage cell may be employed. Furthermore, a capacitor may be employed in place of the storage cell as an example of the "storage portion" in the present invention.

While the apparatus driven by the alternating-current power source has been shown as an example of the specific load 60 in each of the aforementioned first, second, and fourth embodiments, an apparatus driven by a direct-current power source may be employed. In this case, a DC-DC converter performing DC-DC voltage conversion is employed between the storage portion 71 and the specific load 60 in place of the inverter 74a converting direct current to alternating current. Alternatively, the storage portion 71 and the specific load 60 are directly connected to each other. Furthermore, a direct-current load and an alternating-current load may be mixed as the specific load 60. Similarly, as each of the general loads 70 according to the first, second, and fourth embodiments and the general load 80 according to the third embodiment, an apparatus driven by a direct-current power source may be employed.

While the example of arranging the lithium ion storage cell 711, the charge/discharge control box 73, a power conversion unit 700, and the control box 75 side by side has been described in each of the aforementioned first to fourth embodiments, the present invention is not restricted to this, but all or some of these devices may be arranged vertically.

While the example of placing the storage unit 7 outdoors has been described in each of the aforementioned first to fourth embodiments, the present invention is not restricted to this, but the storage unit 7 may be placed indoors. The present invention is more effective in a case where the storage unit 7 is placed in an environment where the air temperature may decrease significantly.

While such an example that the dischargeable threshold is the maximum amount of power generation of the photovoltaic power generation modules 21 has been described in each of the aforementioned first to fourth embodiments, the present invention is not restricted to this, but the dischargeable threshold may not be the maximum amount of power generation. For example, in view of the usage condition, the amount of power consumption, etc. of the specific load or the general load, the dischargeable threshold may be obtained by multiplying the maximum amount of power generation by a prescribed coefficient or the like.

While such an example that the discharge stop threshold is a constant value has been described in each of the aforementioned first to fourth embodiments, the present invention is not restricted to this, but the discharge stop threshold may be determined on the basis of a season, an area, time, etc., similarly to the dischargeable threshold.

While the example of employing a preset value as the dischargeable threshold has been described in each of the aforementioned first to fourth embodiments, the present invention is not restricted to this, but the dischargeable threshold (maximum amount of power generation) may be modified (self-learned) in response to the actual amount of power generation. Thus, even if the situation of the power generation system such as solar radiation hours is changed halfway by building a new building nearby or the like, an optimum value can be automatically set as the dischargeable threshold in the present invention in response to the situation.

## Claims

1. A charge/discharge system comprising:
a storage portion storing power generated by a power generation module coupled to a power grid and discharging power to a load; and
a control portion including a function of stopping discharge of said storage portion on the basis of a result of comparison between a first threshold set in response to an amount of power that can be generated by said power generation module and an amount of power consumption corresponding to power consumed by said load.

2. The charge/discharge system according to claim 1, wherein
said first threshold comprises a value fluctuating in response to a condition of using said power generation module.

3. The charge/discharge system according to claim 2, wherein
said condition of using said power generation module includes at least one of a season, an area where said power generation module is placed, a placement condition under which said charge/discharge system is placed, and time.

4. The charge/discharge system according to claim 3, wherein
said first threshold is set on the basis of a maximum value in a range of said amount of power that can be generated by said power generation module depending on said condition of using said power generation module.

5. The charge/discharge system according to claim 1, further comprising a first power detection portion detecting an amount of power purchase that is an amount of power supplied from said power grid to said charge/discharge system, wherein
said control portion is so configured as to perform control of stopping discharge of said storage portion on the basis of a detection result of said first power detection portion.

6. The charge/discharge system according to claim 5, wherein
said control portion is so configured as to stop discharge of said storage portion when a degree of decrease of said amount of power purchase detected by said first power detection portion reaches at least a prescribed second threshold.

7. The charge/discharge system according to claim 6, wherein
said degree of decrease of said amount of power purchase comprises an amount of decrease per unit time in said amount of power purchase.

8. The charge/discharge system according to claim 1, wherein
said load includes a specific load supplied with power from said storage portion, and
said storage portion is so configured that power of said storage portion is not made to reversely flow into said power grid but supplied to said specific load.

9. The charge/discharge system according to claim 8, further comprising a charging path allowing connection between at least either said power generation module or said power grid and said storage portion and a discharging path not allowing power supply to said power grid but allowing connection between said storage portion and said specific load.

10. The charge/discharge system according to claim 1, further comprising a second power detection portion detecting an amount of power actually generated by said power generation module, wherein
said control portion is so configured as to be capable of discharging power from said storage portion when said amount of power consumption of said load is larger than a smaller amount of said first threshold or a prediction threshold determined on the basis of a predictive power generation amount range predicted from an actual amount of power generation of said power generation module detected by said second power detection portion.

11. The charge/discharge system according to claim 10, wherein
said prediction threshold comprises a maximum value of said predictive power generation amount range predicted from said actual amount of power generation of said power generation module detected by said second power detection portion.

12. The charge/discharge system according to claim 11, wherein
said maximum value of said predictive power generation amount range predicted from said amount of power generation of said power generation module comprises a value obtained by multiplying said actual amount of power generation of said power generation module by a prescribed coefficient.

13. The charge/discharge system according to claim 1, further comprising a second power detection portion detecting an amount of power actually generated by said power generation module, wherein
said control portion is so configured as to employ a value obtained by modifying a maximum amount of power generation of said power generation module in response to an actual amount of power generation of said power generation module detected by said second power detection portion as said first threshold.

14. The charge/discharge system according to claim 1, wherein
said control portion is so configured as to control charge and discharge of said storage portion not to discharge said storage portion when an amount of power stored in said storage portion falls to a prescribed third threshold or less in normal operation.

15. The charge/discharge system according to claim 1, wherein
said control portion is so configured as to be capable of updating said first threshold,
the charge/discharge system further comprising a server so configured as to be capable of communicating with said control portion through a communication line and capable of transmitting updated data of said first threshold to said control portion.
